# EUROPEAN PATENT APPLICATION

(11) **EP 4 825 518 A1**
(43) Date of publication of application: **21.10.2026**
(21) Application number: 24904142.7
(22) Date of filing: 03.12.2024
(51) Int. Cl.: B23K 11/11, B23K 11/24, B23K 37/00, C22C 38/02, C22C 38/04, B23K 101/18

(54) **METHOD FOR RESISTANCE SPOT WELDING OF HOT PRESS FORMED MEMBER**

(30) Priority: 14.12.2023 KR 20230181659
(71) Applicant: POSCO Co., Ltd, Gyeongsangbuk-do 37859 (KR)
(72) Inventor: HAN, Do-Kyeong, Incheon 21985 (KR)
(74) Representative: Meissner Bolte Partnerschaft mbB
(86) International application number: PCT/KR2024/019576
(87) International publication number: WO 2025/127577

(57) **Abstract**

The present invention relates to a method for resistance spot welding of a hot press formed member and, more specifically, to a method for resistance spot welding of a hot press formed member suitable as a material for an automobile.

## Description

### Technical Field

The present invention relates to a method for resistance spot welding of a hot press formed member and, more specifically, to a method for resistance spot welding of a hot press formed member suitable as a material for an automobile.

### Background Art

Among high-strength steel sheets used in automobiles, a hot press formed steel sheet, developed for the purpose of improving fuel efficiency of an automobile and crash performance, is a type of steel sheet undergoing heat treatment for high-temperature forming, thereby maximizing the strength of a final component (hot press formed member). Specifically, unlike conventional forming methods, the steel sheet has the characteristic for obtaining high strength by applying a continuous process of forming, quenching, and rapid cooling after heating a general cold-rolled steel sheet, as a base material, to a high temperature.

The steel sheet for hot forming undergoes processes such as plating, or the like, to prevent surface oxidation occurring during heat treatment for high-temperature forming. A plating layer formed by the plating suppresses contact with air occurring when a material is heat-treated or is transferred to a mold during high-temperature heating of the steel sheet for hot forming, thereby having the effect of preventing oxidation scale.

In general, aluminum-based plating, such as Al-Si-based plating, is applied to mass-produced steel sheets for hot forming, and the plating layer formed by the plating has the characteristic of reacting with a base material according to heat treatment conditions during hot forming to form an Fe-Al-Si intermetallic compound layer, and at the same time, an aluminum-based oxide layer is generated on a surface layer of the plating layer through a reaction with oxygen in the atmosphere or air.

When performing resistance spot welding of a hot press formed member, obtained by hot forming a steel sheet having the plating layer as described above, the intermetallic compound layer and oxide layer formed during a high-temperature heat treatment process for hot forming have a somewhat adverse effect on securing weldability. In other words, the formation of nuggets during resistance spot welding varies depending on contact resistance of the base material, and metallographic changes on the surface of the base material act as a factor excessively increasing the resistance of the base material.

Meanwhile, in recent years, to apply aluminum-based plated steel sheets for hot forming to actual industries such as automobile bodies, parts thereof, there is an increasing demand for accelerated heating rates and production cost reduction during a heat treatment operation for high-temperature forming. Accordingly, there is an increasing development for a material significantly reducing a plating adhesion amount, compared to that of existing mass-produced materials, particularly for a thin-plated steel sheet for hot forming reducing a plating amount during plating from approximately 70 g/m² to approximately 20 g/m² on one side.

When the thin-plated steel sheet for hot forming is subjected to high-temperature treatment for hot forming, there are significant difficulties in securing robustness of above a certain level in a weld zone, required to be applied to automotive actual parts, not only the influence of Fe diffusion is maximized due to the reduction in plating amount, but a plating layer structure is also completely altered.

Accordingly, as an effort to improve the resistance spot weldability of the material, methods such as performing pre-treatment before welding, physically removing (ablating) the plating layer before welding, and the like have been devised. However, there is a problem in that manufacturing costs increase due to additional processes.

Therefore, a method for securing a robust weld zone by improving weldability without a separate additional process, during welding of a hot press formed member, obtained by hot forming the thin-plated steel sheet for hot forming during aluminum-based plating, is required.

(Patent Document 1) Korean Registered Patent Publication No. 10-1696121

### Summary of Invention

### Technical Problem

An aspect of the present disclosure is to provide a method for resistance spot welding that can significantly improve weldability and stably secure tensile properties of a weld zone, wherein when performing resistance spot welding of a hot press formed member obtained by heat treating and forming a thin-plated steel sheet for hot forming at a high temperature by reducing a plating adhesion amount during aluminum-based plating.

An object of the present disclosure is not limited to the above description. The object of the present disclosure will be understood from the entirety of the contents of the present specification, and a person skilled in the art to which the present disclosure pertains will understand an additional object of the present disclosure without difficulty.

### Solution to Problem

According to an aspect of the present disclosure, a method for resistance spot welding of a hot press formed member may include preparing a hot press formed member obtained by hot forming a steel sheet for hot forming including a base steel sheet and an aluminum-based plating layer on at least one surface of the base steel sheet; contacting and pressing an electrode having a tip diameter of 4.0 to 10.0 mm to a welded portion of the hot press formed member; performing preliminary electrification while the electrode is in a pressing state; cooling after the preliminary electrification is completed; and performing main electrification after the cooling.

According to an embodiment of the present disclosure, the aluminum-based plating layer has a thickness of 5.0 to 40.0 µm on one side.

According to another embodiment of the present disclosure, preliminary electrification is performed under conditions satisfying [Equation 1] and [Equation 2] below. [Equation 1] $0.1 \times \frac{{\left({T}_{p}+{f}_{Al}\right)}^{2}}{T} < \int {\left(\frac{2 I}{d}\right)}^{2} {dt}_{w} < 0.3 \times \frac{{\left({T}_{p}+{f}_{Al}\right)}^{2}}{T}$
in Equation 1, Tₚ is a thickness of an aluminum-based plating layer on one side (um), fₐₗ is an area fraction of an Al enrichment layer within the aluminum-based plating layer (%), T is a thickness of a material to be welded (a thickness of the base steel sheet (mm) + a thickness of the plating layer on one side(mm)), I is current during preliminary electrification (kA), d is a tip diameter of an electrode (mm), t_{w} is a time during preliminary electrification (ms).

t_{w} satisfies Equation 2 below.

In addition, in Equation 1, when Tₚ, fₐₗ, and T have two or more materials to be welded, an average value of respective values thereof is applied. [Equation 2] $40 < {t}_{w} \leq 100$

According to another embodiment of the present disclosure, the hot press formed member may include an aluminum-based plating layer on a surface thereof, in contact with an electrode.

According to another embodiment of the present disclosure, the electrode may be pressed with a pressing force of 1.0 to 9.0 kN, cooling may be performed for 0.01 to 1.0 seconds, and main electrification may be performed for 0.2 to 0.5 seconds with a current range of 5.0 to 10.0 kA. In addition, maintaining after the main electrification may be further included.

According to another aspect of the present disclosure, a weld zone may be formed by the method for resistance spot welding described above, and the weld zone may have a tensile strength of 18 kN or more.

### Advantageous Effects of Invention

According to the present disclosure, when performing resistance spot welding of a hot press formed member suitable for automotive materials, particularly a hot press formed member having a thin-plated aluminum-based plating layer by reducing a plating adhesion amount, a weldable current range can be dramatically increased, and more stable properties of a weld zone may be secured.

### Brief description of drawings

FIG. 1 is a graph illustrating an example of a resistance spot welding process according to an embodiment of the present disclosure.
FIG. 2 is a photograph illustrating a cross-section of a hot press formed member having an aluminum-based plating layer, a material to be welded during resistance spot welding, observed in a thickness direction, according to an embodiment of the present disclosure.
FIG. 3 is a photograph of a cross-section of a weld zone of Invention Examples, observed with an optical microscope, according to an embodiment of the present disclosure.
FIG. 4 is a photograph of a cross-section of a weld zone of Comparative Examples, observed with an optical microscope, according to an embodiment of the present disclosure.
FIG. 5 schematically illustrates an example of a tip diameter of an electrode.

### Best Mode for Invention

The present inventors have conducted a method to significantly improve weldability during resistance spot welding of a hot press formed member obtained by heat treating and forming a steel sheet for hot forming, such as an aluminum-based plated steel sheet for hot forming, at a high temperature, which is increasingly being used as an automotive material, to form a robust weld zone.

In particular, in line with the recent trend in which thin plating is performed by significantly reducing a plating adhesion amount during plating, by efforts to improve productivity and reduce costs during the heat treatment operation for high-temperature forming, in the application of the aluminum-based plated steel sheets to actual industries, the present inventors have conducted a method to improve the weldability of the material in-depth.

Accordingly, according to an aspect of the present disclosure, there is technical significance in providing a welding method for improving weldability during spot welding of a hot press formed member, having an aluminum-based plating layer by thin plating, and at the same time, securing tensile properties of a weld zone, without a separate process which are expected to increase costs, other than the resistance spot welding process.

Hereinafter, the present disclosure will be described in detail.

According to an aspect of the present disclosure, a method for resistance spot welding of a hot press formed member may include preparing a hot press formed member including an aluminum-based plating layer; contacting and pressing an electrode to a welded portion of the hot press formed member; performing preliminary electrification while the electrode is in a pressing state; cooling after the preliminary electrification is completed; and performing main electrification after the cooling.

Each operation is described in detail below.

In an embodiment of the present disclosure, as a material to be welded for resistance spot welding, a high-strength material, for example, a high-strength hot press formed member including an aluminum-based plating layer, may be prepared.

The hot press formed member has high strength characteristics, and for example, may have a tensile strength of 900 MPa or more or 1000 MPa or more. As an example, the hot press formed member may be obtained by heating a steel sheet for hot forming having a base steel sheet and an aluminum-based plating layer formed on at least one surface of the base steel sheet, to a high temperature and then hot forming the same.

In an embodiment of the present disclosure, a base steel sheet for forming an aluminum-based plating layer may be any steel that can be applied as carbon steel for an automotive material, and as an example, the carbon steel may be transformation-induced plasticity (TRIP) steel, complex phase (CP) steel, dual phase (DP) steel, or the like, containing a certain amount of carbon (C), manganese (Mn), or the like, and having a tensile strength above a certain level. However, it should be noted that the invention is not limited thereto.

As a non-limiting example, it should be noted that steel having an alloy composition, consisting of, by weight%: 0.19 to 0.25% of carbon (C), 1.10 to 1.40% of manganese (Mn), 0.001 to 0.400% of silicon (Si), 0.001 to 0.025% of phosphorus (P), 0.001 to 0.015% of sulfur (S), with a remainder of Fe and other inevitable impurities, may be used as a base steel sheet.

In an embodiment of the present disclosure, since the aluminum-based plating layer may be formed by a conventional aluminum plating method, the plating conditions are not specifically limited. As an example, an aluminum plating layer may be formed on at least one surface of the base steel sheet by a process of immersing the base steel sheet in a molten aluminum plating bath, and an alloyed aluminum plating layer may also be formed by performing an alloying heat treatment on the base steel sheet on which the aluminum plating layer is formed.

However, according to an embodiment of the present disclosure, when forming the aluminum-based plating layer, thin plating may be performed with a plating adhesion amount of approximately 20 g/m² on one side, and the aluminum-based plating layer may have a thickness of 5.0 to 40.0 µm on one side.

Meanwhile, the aluminum-based plating layer may include, by weight%, depending on the position within the plating layer, 2 to 98% of iron (Fe), 0.01 to 15.0% of silicon (Si), with a remainder of Fe and other inevitable impurities.

More specifically, as the aluminum-based plating layer contains Fe diffused from the base steel sheet by performing hot forming of a high-temperature heat treatment process and a forming process described below, there may be a region with a relatively high Fe content, that is, a region with a higher Fe content compared to the surroundings, and such a region may be referred to as an Fe enrichment layer.

Here, the hot forming refers to a [high-temperature heat treatment process - forming and cooling processes] performed to obtain a conventional hot press formed member, and as an example, the high-temperature heat treatment may be performed in a temperature range in which reverse transformation to austenite is possible, and the forming may be a process of pressing using a mold having a specific shape.

As a non-limiting example, in using a mold during the forming process, a press mold for circulating water or oil inside the mold for the purpose of cooling may be applied, in which case the forming and cooling are performed together. In other words, forming and cooling may be performed simultaneously in a single austenite phase, which is easy to process through high-temperature heat treatment, so that a low-temperature transformation phase of a complex shape may be obtained, and therefrom, high strength may be secured.

According to an embodiment of the present disclosure, an electrode may be in contact with a welded portion of the hot press formed member and then pressed. A pressing force of the electrode may be based on normal conditions, and is not particularly limited, but as an example, the electrode may be pressed with a pressing force of 1.0 to 9.0 kN.

As the electrode, an electrode having a tip diameter of 4.0 to 10.0 mm may be used. When the tip diameter of the electrode is less than 4.0 mm, as a welding current applied per unit area becomes excessively high, the risk of expulsion of a molten material increases. On the other hand, when the tip diameter exceeds 10.0 mm, it becomes difficult to secure an energy source required for a material to be welded to be melted, and there is a concern that a region to be welded may be narrow.

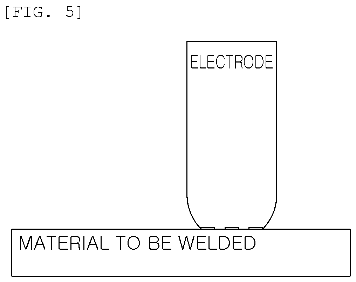

Here, referring to FIG. 5 as an example, the tip diameter of the electrode refers to a length of a line (a length of a dotted line) of a portion in which the electrode contacts the material to be welded.

According to an embodiment of the present disclosure, when contacting an electrode to a welded portion of a hot press formed member, the electrode may be in contact with a surface of the hot press formed member on which the aluminum-based plating layer is formed. Here, the aluminum-based plating layer does not exclude an alloyed aluminum-based plating layer (also known as an aluminum-based alloy plating layer).

As a non-limiting example, when resistance spot welding is performed by stacking two or more hot press formed members of a specific shape, a member stacked in the uppermost position may include an aluminum-based plating layer on an upper surface thereof (a surface in which an electrode contacts). In addition, the member may also include an aluminum-based plating layer on a surface not in contact with the electrode (e.g., a lower surface thereof).

In addition, a steel sheet stacked in the lowermost position of the two or more stacked hot press formed members may also include an aluminum-based plating layer on an upper surface thereof (a surface in contact with the hot press formed member stacked thereabove), and may also include an aluminum-based plating layer on a lower surface thereof, other than the upper surface.

In this case, it should be noted that if an aluminum-based plating layer is included on the upper surface of the hot press formed member stacked in the uppermost position, the number of stacked hot press formed members may exceed two.

Meanwhile, in performing resistance spot welding according to an embodiment of the present disclosure, welding of a single hot press formed member is not excluded. For example, it should be noted that both ends of a single hot press formed member in a longitudinal direction (rolling direction) may be welded together, and both ends thereof in a width direction (a direction, perpendicular to the longitudinal direction) may also be welded together.

Thereafter, current may be applied to an electrode pressing a welded portion of the hot press formed member to perform electrification. In the present disclosure, the process refers to preliminary electrification, and as described below, in the present disclosure, main electrification may be performed after the preliminary electrification.

According to an embodiment of the present disclosure, the hot press formed member of the present disclosure, a material to be welded, is obtained by undergoing a heat treatment and forming process of a steel sheet for hot forming at a high temperature, to form a part into a complex shape. During the process of performing such a heat treatment process, as Fe diffuses into the aluminum-based plating layer, an Fe-based oxide layer is formed along with an Fe-Al-based intermetallic compound layer by the atmosphere inside a furnace for heat treatment. When resistance spot welding is performed with a surface oxide layer, such as the Fe-Al intermetallic compound layer, the Fe-based oxide layer, or the like, formed, even when a low welding current is applied, excessive heat input causes frequent expulsion of the molten material to scatter externally, and in addition, in the intermetallic compound layer with high hardness, there is a problem of brittle fracture due to embrittlement.

Furthermore, when the aluminum-based plating layer is thin-plated with a plating adhesion amount of approximately 20 g/m² on one side, there is a problem in that the formation of the intermetallic compound layer is further accelerated.

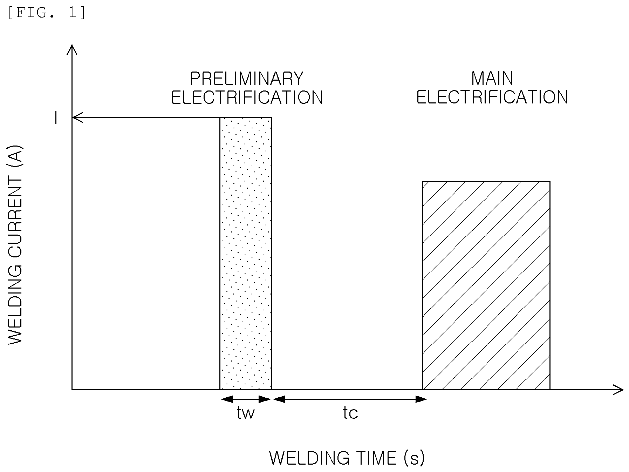

According to an aspect of the present disclosure, when performing spot welding of a hot press formed member obtained by hot forming the steel sheet for hot forming as described above, the welding operation is performed separately (FIG. 1), while the conditions are optimized during preliminary electrification, which is of technical significance.

Specifically, according to an embodiment of the present disclosure, through a preliminary electrification process, high surface resistance inevitably generated during the manufacturing process may be intentionally lowered, and at the same time, the aim was to provide an environment in which an oxide layer and an intermetallic compound layer, present on a surface of the aluminum-based plating layer may be discharged and removed externally of a weld zone. In particular, in the case of a hot press formed member in which an aluminum-based plating layer is formed with a lower plating adhesion amount, compared to that of in the conventional case to obtain various advantages such as productivity and cost reduction in actual industrial environments, the risk of accelerated embrittlement within the weld zone is further increased, so the conditions for preliminary electrification are important to ensure a robust weld zone.

Therefore, the preliminary electrification may be performed under conditions in which the plating layer of the hot press formed member melts above a certain level during the electrification process, and the surface oxide layer and intermetallic compound layer of the welded portion melt, and at the same time, a molten material that can act as a factor increasing the resistance of the material may be intentionally discharged.

In an embodiment of the present disclosure, preliminary electrification may be performed under conditions satisfying [Equation 1] and [Equation 2] below. [Equation 1] $0.1 \times \frac{{\left({T}_{p}+{f}_{Al}\right)}^{2}}{T} < \int {\left(\frac{2 I}{d}\right)}^{2} {dt}_{w} < 0.3 \times \frac{{\left({T}_{p}+{f}_{Al}\right)}^{2}}{T}$
in Equation 1, Tₚ is a thickness of an aluminum-based plating layer on one side (µm), fₐₗ is an area fraction of an Al enrichment layer within the aluminum-based plating layer (%), T is a thickness of a material to be welded (a thickness of the base steel sheet (mm) + a thickness of the plating layer on one side (mm)), I is current during preliminary electrification (kA), d is a tip diameter of an electrode (mm), t_{w} is a time during preliminary electrification (ms).

t_{w} satisfies Equation 2 below.

In addition, in Equation 1, when Tₚ, fₐₗ, and T have two or more materials to be welded, an average value of respective values thereof is applied. [Equation 2] $40 < {t}_{w} \leq 100$

According to an embodiment of the present disclosure, electrification conditions, satisfying [Equation 1] and [Equation 2] are conditions which can cause a phenomenon in which a molten material in a region in which an intermetallic compound layer, or the like, exists, is partially released, in addition to the effect of reducing surface resistance of the hot press formed member. Accordingly, by ensuring that a molten material above a certain level is generated during a subsequent main electrification operation and suppressing defects such as bursting and pores that may occur within a weld zone, a stable current range may be secured during the main electrification, and consequently, excellent physical properties of the spot weld zone may be secured.

In [Equation 1] above, fₐₗ represents an area fraction (%) of an Al enrichment layer present within an aluminum-based plating layer, which is an area fraction of the plating layer based on a cross-section thereof in a thickness direction. This will be described in more detail below using the drawings.

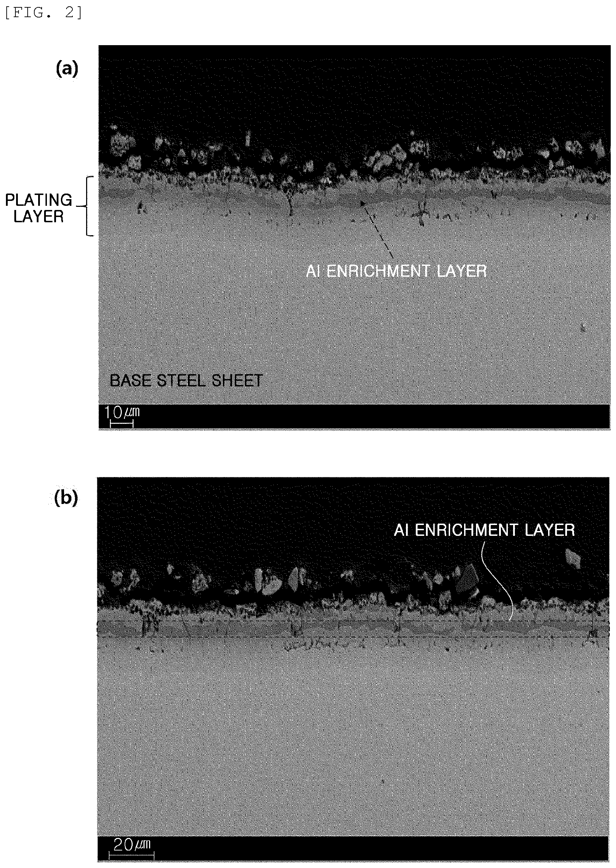

FIG. 2 is a photograph illustrating a cross-sectional shape of a hot press formed member having an aluminum-based plating layer, a material to be welded, in a thickness direction, for performing resistance spot welding according to an embodiment of the present disclosure. Referring to FIG. 2 (a), a portion (a layer darker than the plating layer) which looks like a line of an intermediate layer portion within the plating layer (arrow indicated (a), box indicated (b)) is an Al enrichment layer.

According to an embodiment of the present disclosure, the Al enrichment layer may be formed to have an area fraction with a maximum of 50%. However, regarding the area fraction of the Al enrichment layer, a lower limit thereof is not specifically limited, but it should be noted that the Al enrichment layer may be formed to have an area fraction with a minimum of 0.1 area%, and more advantageously, to have an area fraction with a minimum of 1.0 area% or more.

In addition, in [Equation 1], T is a thickness of a material to be welded, and in the present disclosure, the material to be welded is a thickness of a hot press formed member, i.e., a total thickness of a hot press formed member including a thin-plated aluminum-based plating layer.

Specifically, the hot press formed member may include an aluminum-based plating layer on a base steel sheet, a thickness of the base steel sheet may be in the range of 1.0 to 2.0 mm, and a value obtained by adding the thickness of the aluminum-based plating layer on one side (mm) to the thickness (mm) of the base steel sheet may be a thickness of a material to be welded.

Here, one side of the aluminum-based plating layer refers to a side in contact with an electrode, and as an example, when two materials to be welded are provided, a material to be welded stacked in the uppermost position may be based on the side in contact with the electrode, and a material to be welded stacked in the lowermost position may be based on a side in contact with other materials to be welded. In this case, after measuring an average value of the thickness of the plating layer of each reference plane (one side), the value may be added to an average thickness of the base steel sheet to calculate the thickness T of the material to be welded. In addition, the average value (µm) of the thickness of the plating layer corresponds to Tₚ in [Equation 1].

In performing preliminary electrification according to an embodiment of the present disclosure, when the condition is less than the right-side value of [Equation 1], only a small amount of melting of the material to be welded may be performed at the beginning of welding, and sufficient thermal energy may be transferred to the material to contribute to a decrease in surface resistance. On the other hand, when the condition is greater than or equal to the right-side value of [Equation 1], excessive scattering of a molten material occurs from a preliminary electrification operation, unnecessarily reducing a molten amount of the molten material in the weld zone, and causing a problem in which the physical properties of the weld zone deteriorate.

Meanwhile, according to an embodiment of the present disclosure, when preliminary electrification is performed at a value less than or equal to the left-side value of [Equation 1], there is insufficient thermal energy to contribute to the reduction of surface resistance with only a small amount of melting at the beginning of welding, and as a result, it is not possible to obtain a result of partially discharging the molten material containing the surface oxide layer and the intermetallic compound layer.

That is, since the melting during spot welding of a hot press formed member, a material to be welded is directly affected by the structure within the aluminum-based plating layer, the thickness of the plating layer (i.e., plating adhesion amount), and the thickness of the material to be welded, preliminary electrification of the hot press formed member needs to be considered under conditions satisfying [Equation 1] and [Equation 2] according to the present disclosure.

Therefrom, it is possible to effectively suppress the occurrence of defects in a weld zone that may occur during main electrification performed following the preliminary electrification, and along with improved worker safety, secure a robust weld zone due to the effect of suppressing discharge of the molten material externally, and secure intended tensile properties of the weld zone.

In performing preliminary electrification according to an embodiment of the present disclosure, when a preliminary electrification time (t_{w}), represented by [Equation 2] is 40ms or less, sufficient thermal energy that can contribute to a decrease in surface resistance may not be exerted, whereas when the time exceeds 100ms, there is a risk of excessive scattering of molten material.

In an embodiment of the present disclosure, after preliminary electrification is completed, current applied thereto may be cut off, to cool a molten plating layer for a certain period of time. The molten material generated during the preliminary electrification process may be stabilized by the cooling process. Through such a cooling process, a sufficiently wide range of welding current may be applied while minimizing the occurrence of defects within the weld zone during subsequent main electrification.

In the present invention, in order to further improve the strength of the weld zone, the cooling may be performed within 1.0 second (sec), rather than completely cooling to room temperature, so that latent heat, remaining after the preliminary electrification may be used as a heating source. A lower limit of the cooling time is not specifically limited, but it should be noted that the cooling may be performed for 0.01 seconds or 1 cycle or more based on a power frequency of 60Hz of a welding machine.

In an embodiment of the present invention, after the cooling process is completed, main electrification, corresponding the spot welding process commonly performed in the relevant technical field, may be performed, and a weld zone having desired physical properties may be manufactured therefrom.

The main electrification may be performed under conventional spot welding conditions, but may be performed under conditions where a nugget of a sufficient size may be secured.

Specifically, according to an embodiment of the present disclosure, main electrification may be performed for 0.2 to 0.5 seconds in a current range of 5.0 to 10.0 kA. When a welding current exceeds 10.0 kA or an electrification time exceeds 0.5 seconds during the main electrification, excessive expulsion occurs, making it impossible to obtain the effect of the preliminary electrification. In addition, there is a problem in which the physical properties of the weld zone deteriorate due to the occurrence of numerous defects within the weld zone. On the other hand, when the welding current during the main electrification is less than 5.0 kA or the electrification time is less than 0.2 seconds, it becomes impossible to secure a nugget of a sufficient size, which limits the application thereof as an actual part.

After main electrification according to an embodiment of the present disclosure is completed, a process in which an electrode is maintained in a pressing state for a certain period of time while current to which electrification is performed is cut off.

In this case, it is advantageous to perform the maintaining process for a period sufficient for the nugget formed during main electrification to solidify sufficiently, and the conditions thereof are not specifically limited.

A hot press formed member according to an embodiment of the present disclosure, in particular a hot press formed member obtained by hot forming a steel sheet having an aluminum plating layer to which thin plating is applied to obtain effects such as improved productivity and reduced manufacturing costs, is a material suitable for use as an automotive material.

For automotive parts, or the like, welding is essentially performed in addition to heat treatment for hot forming. When applying the method for resistance spot welding according to the present disclosure to the hot press formed member, surface resistance caused by a surface oxide layer and an intermetallic compound layer generated during the heat treatment process for hot forming may be effectively reduced, thereby providing the advantage of securing a wider current range during the main electrification operation. In addition, by effectively suppressing pores within a molten zone, it has the effect of securing a robust weld zone while providing a weld zone with physical properties above a certain level.

Specifically, by using the method for resistance spot welding provided as an embodiment of the present disclosure, a weld zone having a tensile strength of 18 kN or more may be obtained.

### Mode for Invention

Hereinafter, the present disclosure will be specifically described through the following Examples. However, it should be noted that the following examples are only for describing the present disclosure by illustration, and not intended to limit the right scope of the present disclosure. The reason is that the right scope of the present disclosure is determined by the matters described in the claims and reasonably inferred therefrom.

### (Example)

Two sheets of base steel sheets (Ceq: 0.28) were prepared, including, by weight%, 0.19% of carbon (C), 1.13% of manganese (Mn), 0.250% of silicon (Si), 0.010% of phosphorus (P), 0.002% of sulfur (S), with a remainder of Fe and other inevitable impurities, the base steel sheet having a tensile strength of 1500 MPa and a thickness of 1.5 mm. Each of the base steel sheets was subjected to molten aluminum plating (plating bath components including by weight%: 8 to 11% of Si, 88 to 91% of Al, with a remainder of Fe and other inevitable impurities) to form an aluminum-based plating layer on both surfaces thereof to manufacture a steel sheet for hot forming. Thereafter, each steel sheet for hot forming was heated to a temperature of 900°C and maintained for 5 minutes for heat treatment, and then hot formed to manufacture a hot press formed member. In this case, an average thickness (Tₚ) of the aluminum-based plating layer of the two sheets of hot press formed members on one side was 18.77 µm. In addition, an average area fraction of an Al enrichment layer of each hot press formed member was 23.5% ((a) in FIG. 2) and 21.1% ((b) in FIG. 2), and an average value thereof (22.3%) was applied as fₐₗ in [Equation 1].

After stacking the two sheets of the hot press formed members, an electrode (ISO 5821 F1) was contacted and pressed to a welded portion, and then a resistance spot welding process of [preliminary electrification - cooling - main electrification] was performed under the conditions shown in Table 1 below.

After the resistance spot welding according to the above is completed, in order to determine robustness of a weld zone, test specimens were fabricated under conditions, identical to each resistance spot welding condition, and then a tensile strength (kN) of the weld zone was measured. In this case, a welding current range (kA) was defined by setting current at a point in time at which expulsion occurs as an upper limit thereof, and current at a point in time at which a nugget diameter is less than 4.0√t, where t is a thickness of a material to be welded (mm), i.e., the sum of a thickness of a base steel sheet (mm) and a thickness of a plating layer on one side (mm) as a lower limit thereof, and a difference therebetween was calculated and shown. The results for each are shown in Table 2.

**[Table 1]**

| Division | Electrode conditions | | Preliminary electrification | | Cooling | Main electrification | | Maintai ning | Whether [Equation 1] is satisfied |
|---|---|---|---|---|---|---|---|---|---|
| | Tip diameter (mm) | Pressin g force (kN) | Current (kA) | Time (ms) | Time (s) | Current (kA) | Time (s) | Time (s) | |
| Comparative Example 1 | 8 | 5.0 | 0 | 0 | 0 | 5.8 | 0.30 | 0.15 | × |
| Comparative Example 2 | 8 | 5.0 | 4.0 | 40 | 0.30 | 6.6 | 0.30 | 0.20 | × |
| Comparative Example 3 | 6 | 5.0 | 9.5 | 100 | 0.30 | 5.2 | 0.28 | 0.10 | × |
| Invention Example 1 | 8 | 5.0 | 6.5 | 45 | 0.30 | 6.8 | 0.28 | 0.15 | ○ |
| Invention Example 2 | 8 | 5.0 | 9.0 | 50 | 0.30 | 5.4 | 0.30 | 0.20 | ○ |
| Invention Example 3 | 6 | 5.0 | 4.5 | 80 | 0.30 | 6.0 | 0.30 | 0.10 | ○ |

**[Table 2]**

| Division | Welding current range (kA) | Strength in weld zone(kN) |
|---|---|---|
| Comparative Example 1 | 0.0 | 11.7 |
| Comparative Example 2 | 0.4 | 12.5 |
| Comparative Example 3 | 0.2 | 10.9 |
| Invention Example 1 | 1.0 | 19.2 |
| Invention Example 2 | 1.4 | 21.1 |
| Invention Example 3 | 1.4 | 24.2 |
| The welding current range is a range between the minimum and maximum values in a current range in which welding may be performed during main electrification, and as an example, refers to a range between a minimum current value at which a minimum nugget diameter may be secured and a maximum current value at which spatter occurs. | | |

As shown in Tables 1 and 2 above, Invention Examples 1 to 3, in which [preliminary electrification - cooling - main electrification] was performed using a spot welding method proposed in the present disclosure, all have strength in a weld zone of 19.0 kN or more, confirming that the mechanical properties of the weld zone are excellent. In addition, there is an advantage in that very stable conditions can be secured when performing welding by expanding a weldable current range.

On the other hand, it can be confirmed that Comparative Example 1, in which preliminary electrification is not performed, has significantly inferior strength in a weld zone.

Meanwhile, in Comparative Examples 2 and 3, which performed preliminary electrification, but did not satisfy the conditions proposed in the present disclosure, it can be confirmed that the weldable range is narrow and the strength in a weld zone is also low. This was confirmed to be due to the fact that surface resistance of a welded portion was not sufficiently lowered during the preliminary electrification process.

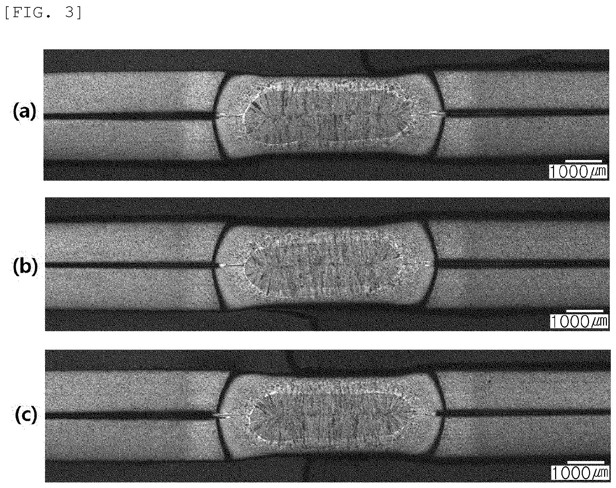

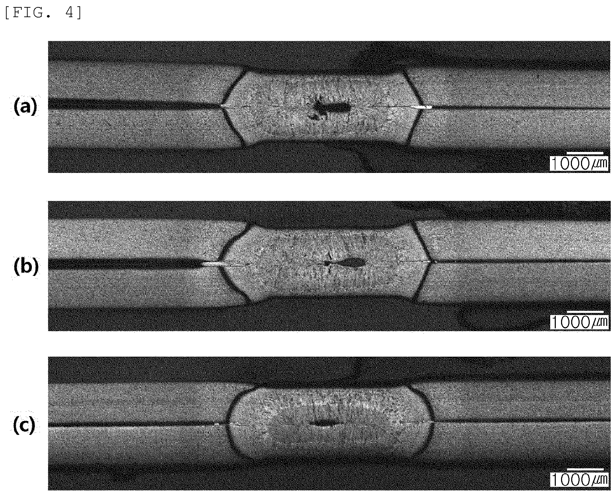

FIG. 3 illustrates a photograph of a cross-section of a weld zone of Invention Examples 1 to 3, observed with an optical microscope, and FIG. 4 illustrates a photograph of a cross-section of a weld zone of Comparative Examples 1 to 3, observed with an optical microscope.

As can be confirmed in FIG. 3, in the case of Invention Examples, it is possible to stably secure a melting amount above a certain level. However, as shown in FIG. 4, in the case of Comparative Examples, it is impossible to secure a molten amount above a certain level due to expulsion caused by excessive heat input within the weld zone, and it can be confirmed that the physical properties of the weld zone have deteriorated due to numerous porosity phenomena occurring in an unstable molten state.

## Claims

1. A method for resistance spot welding of a hot press formed member, comprising:
preparing a hot press formed member obtained by hot forming a steel sheet for hot forming, including a base steel sheet and an aluminum-based plating layer on at least one surface of the base steel sheet;
contacting and pressing an electrode having a tip diameter of 4.0 to 10.0 mm to a welded portion of the hot press formed member;
performing preliminary electrification while the electrode is in a pressing state;
cooling after the preliminary electrification is completed; and
performing main electrification after the cooling,
wherein the aluminum-based plating layer has a thickness of 5.0 to 40.0 µm on one side, and the preliminary electrification is performed under conditions satisfying [Equation 1] and [Equation 2] below, [Equation 1] $0.1 \times \frac{{\left({T}_{p}+{f}_{Al}\right)}^{2}}{T} < \int {\left(\frac{2 I}{d}\right)}^{2} {dt}_{w} < 0.3 \times \frac{{\left({T}_{p}+{f}_{Al}\right)}^{2}}{T}$
in Equation 1, Tₚ is a thickness of an aluminum-based plating layer on one side (µm), fₐₗ is an area fraction of an Al enrichment layer within the aluminum-based plating layer (%), T is a thickness of a material to be welded (a thickness of the base steel sheet (mm) + a thickness of the plating layer on one side (mm)), I is current during preliminary electrification (kA), d is a tip diameter of an electrode (mm), t_{w} is a time during preliminary electrification (ms),
t_{w} satisfies Equation 2 below,
in addition, in Equation 1, when Tₚ, fₐₗ, and T have two or more materials to be welded, an average value of respective values thereof is applied. [Equation 2] $40 < {t}_{w} \leq 100 .$

2. The method for resistance spot welding of a hot press formed member of claim 1, wherein the hot press formed member includes an aluminum-based plating layer on a surface thereof, in contact with the electrode.

3. The method for resistance spot welding of a hot press formed member of claim 1, wherein the electrode is pressed with a pressing force of 1.0 to 9.0 kN.

4. The method for resistance spot welding of a hot press formed member of claim 1, wherein the cooling is performed for 0.01 to 1.0 seconds.

5. The method for resistance spot welding of a hot press formed member of claim 1, wherein the main electrification is performed for 0.2 to 0.5 seconds with a current range of 5.0 to 10.0 kN.

6. The method for resistance spot welding of a hot press formed member of claim 1, further comprising:
maintaining after the main electrification.

7. The method for resistance spot welding of a hot press formed member of claim 1, wherein the base steel sheet includes by weight %, 0.19 to 0.25% of carbon (C), 1.10 to 1.40% of manganese (Mn), 0.001 to 0.400% of silicon (Si), 0.001 to 0.025% of phosphorus (P), 0.001 to 0.015% of sulfur (S), with a remainder of Fe and other inevitable impurities.

8. A weld zone formed by the method for resistance spot welding of one of claims 1 to 7, the weld zone having a tensile strength of 18 kN or more.
